# DEMANDE DE BREVET EUROPEEN

(11) **EP 4 797 183 A1**
(43) Date de publication de la demande: **26.08.2026**
(21) Numéro de dépôt: 26159911.2
(22) Date de dépôt: 20.02.2026
(51) Int. Cl.: G06Q 30/015, G09F 27/00, G09F 19/22, H04N 21/414

(54) **PROCÉDÉ ET SYSTÈME DE GESTION D AFFICHAGE PUBLIC UTILISANT LES SERVICES DE COMMUNICATION ENRICHIS (RCS)**

(30) Priorité: 24.02.2025 FR 2501895
(71) Demandeur: Orange, 92130 Issy-les-Moulineaux (FR)
(72) Inventeur: LIEWIG, Matthieu, 92326 CHATILLON CEDEX (FR); DELOYE, Joachim, 92326 CHATILLON CEDEX (FR)
(74) Mandataire: Plasseraud IP

(57) **Abrégé**

La présente divulgation concerne un système d'affichage public utilisant le protocole RCS pour diffuser des informations contextuelles. Elle propose la création d'agents conversationnels pour envoyer des messages aux équipements d'affichage (A1-A3, B1-B4), avec une liste blanche d'identifiants d'agents autorisés à envoyer des messages vers ces équipements. Ce système assure une communication sécurisée et standardisée, simplifiant le déploiement et la gestion des affichages publics. Il permet une mise à jour rapide des informations, améliorant l'accessibilité et la disponibilité des données pour les utilisateurs (13), même à distance.

## Description

### Domaine technique

La présente divulgation relève du domaine des technologies de communication, plus particulièrement l'utilisation de ces technologies pour la diffusion d'informations contextuelles sur des systèmes d'affichage public.

### Technique antérieure

Un système d'affichage public est un ensemble de dispositifs et de technologies conçus pour diffuser des informations audiovisuelles à un large public dans des espaces publics ou semi-publics. Il comprend généralement des écrans numériques ou des panneaux d'affichage, des logiciels de gestion de contenu, et des moyens de communication pour la transmission des données. Ces systèmes sont utilisés pour présenter des informations contextuelles, telles que des annonces, des horaires, des alertes ou des publicités, et peuvent être déployés dans divers environnements tels que les gares, les aéroports, les centres commerciaux, les musées, les mairies, les arrêts de bus, de tramway, ou de métro et les espaces urbains. Un système d'affichage public moderne intègre souvent des technologies avancées pour permettre une mise à jour en temps réel des contenus (dans certains cas, chaque minute), une gestion centralisée, et une interactivité avec le public, tout en assurant la sécurité et la fiabilité des informations diffusées.

Dans l'état de la technique actuel, les systèmes d'affichage public reposent principalement sur des technologies basées sur Internet, telles que les protocoles HTTP et FTP, pour la diffusion de contenu. Ces systèmes nécessitent souvent des infrastructures complexes et des développements logiciels personnalisés pour gérer et mettre à jour les informations affichées. Les solutions existantes utilisent généralement des serveurs centralisés pour distribuer le contenu aux écrans d'affichage, ce qui peut entraîner des délais de mise à jour et des coûts élevés de maintenance. Les systèmes d'affichage n'étant pas standardisés, le déploiement par un exploitant (mairie, société de transport, etc.) d'un affichage public nécessite le plus souvent le lancement d'un projet informatique incluant du développement logiciel ou de l'intégration logicielle souvent complexes et coûteux.

En outre, si l'exploitant souhaite également diffuser les mêmes informations contextuelles directement à des utilisateurs ou usagers, il est le plus souvent nécessaire de prévoir un autre canal de diffusion d'information, en parallèle du canal propriétaire dédié aux équipements d'affichage public. Il n'est pas facile par exemple pour les utilisateurs de recevoir la même information directement sur leur smartphone.

En variante aux solutions reposant sur les technologies Internet de type HTTP ou FTP, certains systèmes d'affichage public utilisent le protocole de communication radio LoRaWAN (acronyme de « Long Range Wide-Area Network », pour « réseau étendu à longue portée »), qui est un protocole de communication pour l'Internet des objets, reposant sur une technique propriétaire de modulation par étalement de spectre. Cependant, les technologies LoRaWAN ciblent principalement les communications nécessitant de faire transiter un volume de données faible avec un débit réduit. De même que les technologies de messagerie traditionnelles, telles que les SMS, elles ont donc été utilisées de manière limitée en raison de leur incapacité à gérer des contenus multimédias riches et interactifs.

Par conséquent, il existe un besoin pour des solutions plus efficaces, sécurisées et standardisées pour la gestion des systèmes d'affichage public.

### Exposé

La présente divulgation vient améliorer la situation.

Il est proposé un procédé de gestion d'un système d'affichage public, comprenant une création d'une liste d'identifiants d'au moins un agent conversationnel autorisé à envoyer des messages via un réseau de communication internet à un ensemble d'au moins un équipement d'affichage public du système, les messages étant conformes au protocole de messagerie enrichie RCS (pour l'anglais « Rich Communication Services »).

Selon un autre aspect, il est proposé un système d'affichage public comprenant un ensemble d'au moins un équipement d'affichage public et un ou plusieurs agents conversationnels, chacun configuré pour envoyer, via un réseau de communication internet, audit ensemble d'au moins un équipement d'affichage public dudit système auquel il est associé, des messages conformes au protocole de messagerie enrichie RCS (pour l'anglais « Rich Communication Services »).

Selon un autre aspect, il est proposé un programme informatique comportant des instructions pour la mise en œuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Un tel procédé de gestion d'un système d'affichage public permet une communication standardisée et sécurisée entre les agents et les équipements d'affichage public, ce qui simplifie considérablement le déploiement et la gestion des systèmes d'affichage public. En intégrant une liste d'identifiants d'agents autorisés, le système assure que seuls les messages provenant de sources vérifiées sont affichés, renforçant ainsi la sécurité et la fiabilité des informations diffusées. Cette méthode réduit le besoin de développements logiciels complexes, réduisant ainsi également les coûts et le temps de mise en œuvre. De plus, l'utilisation du protocole RCS permet une mise à jour rapide et efficace des informations, améliorant l'expérience utilisateur en fournissant des données en temps réel. L'architecture proposée offre une solution plus flexible et économique par rapport aux systèmes d'affichage traditionnels basés sur des technologies Internet non standardisées.

Les caractéristiques exposées dans les paragraphes suivants peuvent, optionnellement, être mises en œuvre, indépendamment les unes des autres ou en combinaison les unes avec les autres :

Un tel procédé comprend en outre une génération d'un message à diffuser par l'un des agents, et une diffusion du message RCS généré, par l'agent, vers l'ensemble d'équipements qui lui est associé, et un affichage, par les équipements de l'ensemble, du message RCS diffusé.

On assure ainsi que les informations contextuelles transmises via le protocole RCS sont effectivement présentées au public cible sur les dispositifs d'affichage. Cela garantit que les messages enrichis, qui peuvent inclure du texte, des images ou d'autres contenus multimédias, sont rendus visibles pour les utilisateurs finaux, par exemple sur des écrans numériques des équipements d'affichage public.

Un tel procédé comprend en outre une validation, par un opérateur du réseau de communication internet, des agents conversationnels créés.

On renforce ainsi la sécurité du système d'affichage public. En effet, cette validation par l'opérateur garantit que seuls les agents conversationnels autorisés peuvent envoyer des messages aux équipements d'affichage, empêchant ainsi l'affichage de contenus non autorisés ou malveillants. Cela améliore la fiabilité et l'intégrité des informations diffusées, tout en réduisant le risque d'interférences ou de manipulations externes. En conséquence, le système devient plus robuste et sécurisé, assurant une communication fiable entre les agents et les équipements d'affichage public.

Les agents conversationnels sont configurés pour gérer des discussions de groupe et diffuser les messages RCS dans les discussions de groupe.

On améliore ainsi la communication et la diffusion d'informations à un large public de manière simultanée et efficace. En permettant aux agents conversationnels de gérer des discussions de groupe, le système peut diffuser des messages enrichis à plusieurs équipements d'affichage public en même temps, ce qui optimise l'utilisation des ressources réseau et améliore l'efficacité de la transmission des informations. Cela permet également une interactivité accrue et une meilleure gestion des communications dans des environnements où plusieurs équipements ou utilisateurs doivent recevoir les mêmes informations en temps réel, comme dans les transports publics ou lors d'événements.

Un tel procédé comprend en outre un abonnement d'au moins un utilisateur, à une discussion de groupe au sein de laquelle sont diffusés les messages RCS affichés par l'un des équipements d'affichage public.

On peut ainsi avantageusement étendre la portée des informations diffusées par les systèmes d'affichage public au-delà des limites physiques des écrans d'affichage. En permettant aux utilisateurs de s'abonner à des discussions de groupe, le système offre la possibilité de recevoir les mêmes informations directement sur leurs appareils personnels, tels que les smartphones ou tablettes, même lorsqu'ils ne se trouvent pas physiquement devant l'afficheur public. Cela améliore l'accessibilité et la disponibilité des informations, permettant aux utilisateurs de rester informés en temps réel, peu importe leur emplacement, et d'anticiper leurs actions en fonction des informations reçues, comme dans le cas de perturbations dans les transports publics par exemple.

Un tel abonnement comprend un scan, par un équipement de communication de l'utilisateur, d'un QR code disposé à proximité de l'équipement d'affichage public.

Le processus d'abonnement des utilisateurs aux discussions de groupe est ainsi simple et facile. En utilisant un QR code, les utilisateurs peuvent rapidement et facilement s'abonner aux flux d'informations pertinents en scannant simplement le code avec leur appareil mobile. Cela élimine la nécessité de procédures d'inscription complexes ou de saisie manuelle d'informations, ce qui améliore l'expérience utilisateur et encourage une adoption plus large du système. De plus, cette méthode assure que l'utilisateur s'abonne au bon flux d'informations, car le QR code est spécifiquement lié à l'équipement d'affichage public concerné.

Un tel procédé comprend en outre une validation, par un opérateur d'un réseau de communication mobile auquel est abonné l'utilisateur, des agents conversationnels créés.

La sécurité du système d'affichage public est ainsi renforcée. En effet, cette validation par l'opérateur de l'utilisateur garantit à ce dernier que le flux de messages RCS auquel il s'abonne est fiable et légitime, et que cet abonnement ne sera pas la cause, pour l'utilisateur, de la réception de spams ou pourriels.

Un tel procédé comprend en outre une sécurisation des communications entre les agents et les équipements d'affichage public comprenant une identification des agents et une authentification des messages diffusés par une carte SIM ou eSIM intégrée dans les équipements d'affichage public.

En utilisant une carte SIM ou eSIM pour l'identification et l'authentification, le système assure que seuls les agents autorisés peuvent communiquer avec les équipements d'affichage, réduisant ainsi le risque d'accès non autorisé et de diffusion de contenus malveillants. Cette approche renforce la protection des données transmises et garantit l'intégrité des informations affichées, tout en maintenant une communication sécurisée et fiable entre les différents composants du système.

Dans un tel système d'affichage public, chaque équipement d'affichage public de l'ensemble comprend un dispositif d'affichage, une application de messagerie RCS et un moyen de communication Internet, les équipements étant configurés pour recevoir et afficher des messages provenant des agents conversationnels, un tel système comprenant en outre un module de génération (42) d'un message RCS à diffuser par l'un des agents vers l'ensemble d'équipements qui lui est associé. Un tel système peut être configuré pour mettre en œuvre le procédé de gestion décrit ci-avant, dans tout ou partie de ses variantes de réalisation.

### Brève description des dessins

D'autres caractéristiques, détails et avantages apparaîtront à la lecture de la description détaillée ci-après, et à l'analyse des dessins annexés, sur lesquels :
**Fig. 1**

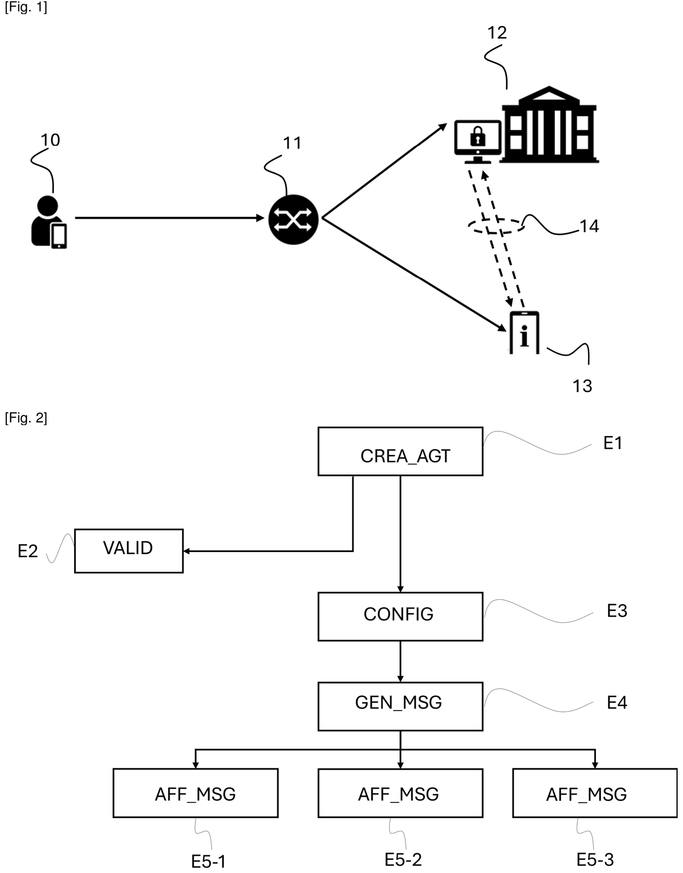

   [Fig. 1] présente sous forme de schéma synoptique un premier exemple d'application de la solution de gestion d'affichage public selon un mode de réalisation.
**Fig. 2**
   [Fig. 2] montre un procédé de gestion d'affichage public sous forme d'organigramme simplifié selon un mode de réalisation.
**Fig. 3**

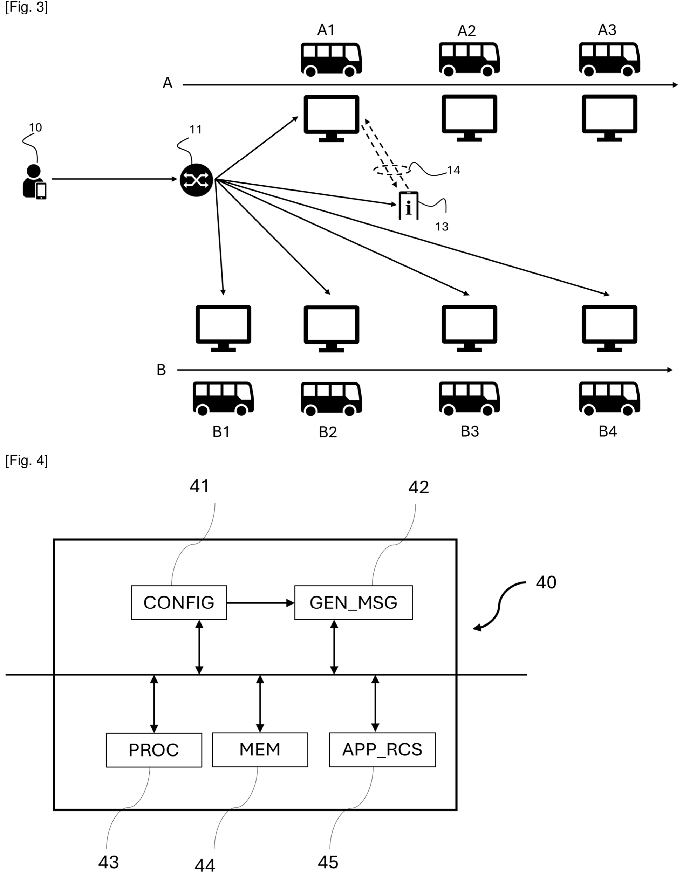

   [Fig. 3] présente sous forme de schéma synoptique un autre exemple d'application de la solution de gestion d'affichage public dans le cadre d'un réseau de transport.
**Fig. 4**
   [Fig. 4] illustre un système informatique conçu pour gérer un système d'affichage public utilisant le protocole RCS selon un mode de réalisation.

### Description des modes de réalisation

Le principe général de l'invention repose sur une solution d'affichage public utilisant la technologie RCS (Rich Communication Services) pour diffuser des informations contextuelles sur des bâtiments publics et des équipements urbains.

Les services de communication enrichis (RCS) sont définis par la norme GSMA Universal Profile, qui vise à remplacer les SMS traditionnels par des messages plus riches et interactifs. RCS permet l'envoi de messages multimédias, tels que des images, des vidéos et des fichiers, ainsi que des fonctionnalités avancées comme les confirmations de lecture, les indicateurs de saisie et les discussions de groupe. Cette technologie offre une communication standardisée et uniforme, facilitant l'interopérabilité entre différents opérateurs et appareils. RCS est conçu pour fonctionner sur les réseaux de données mobiles et Wi-Fi, offrant ainsi une expérience utilisateur améliorée par rapport aux SMS classiques. La norme GSMA Universal Profile assure que les fonctionnalités RCS sont compatibles à l'échelle mondiale, permettant une adoption et une intégration plus larges dans les services de messagerie existants.

Le RCS Business Messaging est une composante avancée du protocole Rich Communication Services, qui permet aux entreprises de communiquer de manière enrichie et interactive avec leurs clients. Contrairement aux SMS traditionnels, le RCS Business Messaging offre la possibilité d'envoyer des messages multimédias, tels que des images, des vidéos et des fichiers, tout en intégrant des fonctionnalités avancées comme les confirmations de lecture et les indicateurs de saisie. Cette technologie permet aux entreprises de créer des expériences de communication plus engageantes et personnalisées, facilitant ainsi le marketing, le support client et d'autres interactions commerciales. En utilisant le RCS Business Messaging, les entreprises peuvent atteindre leurs clients directement sur leurs appareils mobiles sans nécessiter d'applications supplémentaires, ce qui simplifie l'engagement et améliore l'efficacité des campagnes de communication.

L'approche proposée repose sur les fonctionnalités offertes par cette technologie RCS Business Messaging. Elle résout les inconvénients des solutions antérieures, en permettant une communication standardisée et sécurisée sans nécessiter de développement logiciel complexe. Grâce à l'utilisation de la messagerie RCS, les informations peuvent être envoyées via une application de messagerie standard, permettant une mise à jour rapide et efficace des contenus affichés. De plus, la fonctionnalité de messagerie de groupe permet à un ensemble de terminaux de recevoir simultanément les informations distribuées, améliorant ainsi l'accessibilité et l'efficacité de la communication. Cette méthode réduit les coûts d'installation et de maintenance, tout en offrant une flexibilité d'adaptation à divers types d'équipements publics.

Il est maintenant fait référence à la figure 1, qui présente sous forme de schéma synoptique un premier exemple d'application d'une telle solution de gestion d'affichage public.

On considère un exemple d'application à un lieu public, tel qu'un musée 12, dans lequel sont disposés un ou plusieurs équipements d'affichage public. Par exemple, ces équipements sont disposés dans le hall d'accueil du musée, ainsi que dans chacune des salles ou collections du musée. Ces équipements d'affichage, symbolisés, par souci de simplification, sous la forme d'un unique écran sur la figure 1, sont destinés à diffuser différentes informations contextuelles à destination des visiteurs.

Dans le musée 12, le procédé de gestion d'affichage public proposé permet, selon un mode de réalisation, de transformer l'expérience des visiteurs en offrant des informations contextuelles en temps réel via ces écrans d'affichage public. Par exemple, des agents conversationnels peuvent diffuser des annonces sur les expositions en cours, les horaires des visites guidées ou les conférences à venir. Les visiteurs peuvent également s'abonner à des discussions de groupe pour recevoir ces informations directement sur leurs téléphones intelligents (en anglais « smartphones ») 13, même lorsqu'ils ne sont pas devant un écran. En scannant un QR code à proximité des affichages, selon l'étape symbolisée par les flèches référencées 14 sur la figure 1, les visiteurs peuvent facilement s'inscrire pour recevoir des mises à jour personnalisées, améliorant ainsi leur expérience et leur engagement avec le musée.

Pour ce faire, un administrateur ou un système informatique du musée, portant la référence 10 sur la figure 1, émet des messages RCS vers tout ou partie des afficheurs du musée 12. Ces messages transitent via l'infrastructure 11 de messagerie RCS de l'opérateur télécom, jusqu'aux équipements d'affichage du musée 12, où ils sont restitués aux utilisateurs, par exemple sur des écrans d'affichage numériques. Un utilisateur qui s'est abonné au flux de conversations de l'un des équipements d'affichage du musée 12 peut également recevoir directement ces messages sur son smartphone 13. Il peut ainsi par exemple être informé qu'une conférence débute dans la salle de cet équipement, même s'il se trouve dans une autre aile du bâtiment ou à la cafétéria du musée.

La mise en œuvre de cette solution repose sur le procédé de gestion d'affichage public représenté sous forme d'organigramme simplifié sur la figure 2.

Lors d'une première étape référencée E1 (CREA_AGT), un administrateur 10 définit un ou plusieurs agents conversationnels. On définit un agent conversationnel comme un programme informatique conçu pour interagir avec des utilisateurs ou d'autres systèmes via des interfaces de communication, telles que des applications de messagerie. Dans le contexte de la présente invention, un agent conversationnel est une entité sécurisée qui sert de source de communication vers un ou plusieurs équipements d'affichage, permettant la transmission et la gestion de messages de manière sécurisée et contrôlée. Il est configuré par un administrateur 10 pour définir le périmètre des équipements d'affichage qui recevront les messages, et il est validé pour un usage spécifique et associé à une entreprise légitime.

En se référant à l'exemple d'application à un réseau de transport urbain illustré par la figure 3, l'administrateur 10 crée par exemple, au cours de cette étape CREA_AGT E1 un agent d'information globale du réseau de transport, un agent pour chacune des lignes de bus A et B et un agent pour chacun des arrêts de bus A1 à A3 et B1 à B4 des lignes de bus A et B.

Dans un mode de réalisation, les agents ainsi créés sont validés au cours d'une étape référencée E2 (VALID) par un ou plusieurs opérateurs de télécommunication, qui vérifient que l'entreprise de gestion du réseau de transport est bien autorisée à communiquer avec ses clients, à savoir les équipements d'affichage équipant chacun des arrêts de bus A1 à A3 et B1 à B4, ainsi que les usagers de ce réseau de transport qui choisiraient de s'abonner aux flux de messages RCS diffusés par l'un des agents créés. Cette validation E2 permet d'écarter toute entreprise malfaisante, et assure que seule les entreprises légitimes puissent exploiter la solution proposée.

Selon un premier aspect, cette validation E2 peut comprendre une validation par l'opérateur du réseau de communication internet auquel a souscrit l'entreprise de gestion du réseau de transport pour l'ensemble de ses équipements d'affichage. En effet, ces équipements d'affichage intègrent tous, outre un afficheur physique, un moyen de communication internet, permettant l'authentification de l'équipement au moyen d'une carte SIM ou eSIM, et une application de messagerie RCS.

Par afficheur physique, on entend un dispositif matériel conçu pour présenter visuellement des informations sous forme de texte, d'images ou de vidéos. Dans le contexte de la présente invention, un afficheur physique est un équipement intégré dans des systèmes d'affichage public, tel qu'un écran numérique, qui reçoit et affiche des messages transmis par des agents conversationnels via la technologie RCS.

Par moyen de communication internet, on entend un dispositif ou une technologie qui permet la transmission de données entre des appareils via le réseau Internet. Cela inclut des technologies telles que le Wi-Fi, l'Ethernet, la 4G/5G/6G, ou toute autre méthode de connexion qui utilise le protocole IP (Internet Protocol) pour échanger des informations. Dans le contexte des systèmes d'affichage public, un moyen de communication Internet permet aux équipements d'affichage de recevoir et d'envoyer des messages ou des données à travers le réseau, assurant ainsi une mise à jour en temps réel des informations affichées. Dans un mode de réalisation, ce moyen de communication internet repose sur une carte SIM ou eSIM intégrée dans l'équipement d'affichage public.

Une carte SIM (Subscriber Identity Module) est une puce électronique utilisée dans les téléphones mobiles pour stocker des informations d'identification de l'abonné, telles que le numéro de téléphone, les clés de sécurité, et les données de l'opérateur. Elle permet à l'appareil de se connecter au réseau mobile de l'opérateur et de bénéficier de services tels que les appels, les SMS et l'accès à Internet. Une eSIM (embedded SIM) est une version numérique de la carte SIM traditionnelle, intégrée directement dans l'appareil. Elle offre les mêmes fonctionnalités que la carte SIM physique, mais permet une gestion plus flexible des abonnements. Avec une eSIM, les utilisateurs peuvent changer d'opérateur ou de forfait sans avoir à insérer ou retirer une carte physique, simplement en téléchargeant un profil de l'opérateur sur leur appareil. Cette technologie est de plus en plus adoptée dans les smartphones, les tablettes et les appareils connectés, facilitant ainsi la connectivité et la gestion des abonnements.

Selon un autre aspect, la validation E2 peut également comprendre une validation des agents par un ou plusieurs autres opérateurs de communication, qui ne gèrent pas la flotte d'équipements de l'entreprise de gestion du réseau de transport, mais auprès desquels des usagers ont souscrit un abonnement de téléphonie mobile. Ce ou ces opérateurs peuvent valider le fait que l'entreprise de gestion du réseau de transport est une entreprise légitime et autorisée à diffuser de l'information vers ses abonnés, et valider les agents conversationnels créés, ce qui permet aux usagers d'être rassurés quant au fait qu'ils ne recevront pas de messages de spam s'ils choisissent de s'abonner aux flux RCS proposés par le réseau de transport.

Dans un mode de réalisation, une interface logicielle, ou console RCS Business Messaging, est associée à chaque opérateur, et l'administrateur 10 déclare ses agents sur tout ou partie de ces consoles, pour validation par les opérateurs associés. L'administrateur 10 peut bien sûr aussi choisir d'exclure l'un des opérateurs s'il le souhaite, pour refuser l'accès de ses abonnés aux flux RCS qu'il diffusera par l'intermédiaire de ses agents conversationnels.

En revenant à l'organigramme de la figure 2, l'administrateur 10 configure ensuite, au cours d'une étape référencée E3 (CONFIG), une liste blanche (en anglais « Whitelist ») d'identifiants d'agents autorisés pour chaque équipement d'affichage A1 à A3 et B1 à B4.

Par exemple, l'équipement d'affichage A1, qui est situé dans le premier arrêt de bus de la ligne A, est configuré pour ne recevoir que les messages provenant des agent validés et sécurisés correspondant à l'agent « Information générale du réseau », « Ligne A » et « Arrêt A1 ». L'identifiant de l'agent associé à la ligne B ne fait par exemple pas partie de la liste blanche configurée pour l'équipement d'affichage A1.

Dans un mode de réalisation, cet identifiant est un numéro de téléphone associé à l'agent. L'utilisation d'une telle liste blanche (ou "whitelist") dans un système d'affichage public présente plusieurs avantages en termes de sécurité et de contrôle des communications. En limitant les communications aux seuls agents conversationnels figurant sur cette liste, le système empêche l'affichage de contenus non autorisés ou malveillants, renforçant ainsi la sécurité et l'intégrité des informations diffusées. Cela réduit le risque d'accès non autorisé et de manipulation des données, assurant que seules les sources vérifiées et légitimes peuvent interagir avec les équipements d'affichage. De plus, la liste blanche simplifie la gestion des communications en filtrant automatiquement les messages indésirables, ce qui améliore la fiabilité et la qualité des informations présentées au public.

Au cours d'une étape référencée E4 (GEN_MSG), un émetteur de l'entreprise de gestion du réseau de transport utilise ensuite son application de Business Messaging pour envoyer des messages sur tout ou partie de chacun de ses trois types d'agents, au bon moment, en fonction de l'information contextuelle à diffuser. Par émetteur, on entend une entité, qui peut être un humain ou un système informatique, responsable de l'envoi de messages via un agent conversationnel. L'émetteur utilise des outils de messagerie pour générer et transmettre des informations contextuelles aux équipements d'affichage public. Ces messages sont conformes au protocole RCS et peuvent inclure du texte, des images, des vidéos ou d'autres contenus multimédias. L'émetteur joue un rôle clé dans la gestion et la diffusion des informations, en s'assurant que les messages atteignent les destinataires appropriés de manière sécurisée et efficace.

Par exemple, une information du type « Préavis de grève pour samedi prochain » pourrait être diffusée par l'agent « Information générale du réseau » ; une information du type « Travaux de voirie sur le trajet de la ligne B du 12 au 15 février » pourrait être diffusée par l'agent de la ligne B (voir flèches multiples correspondantes sur la figure 3) ;une information du type « Bus 357 prévu à 14h55 : retard de 2 minutes » pourrait être diffusée par le seul agent de l'arrêt A1 auquel le bus 357 doit arriver à 14h55, pour affichage sur l'écran de l'arrêt A1 (voir flèche unique correspondante sur la figure 3).

Selon l'agent conversationnel utilisé pour diffuser un message RCS, ce dernier est ensuite affiché, au cours d'étapes référencés E5-1, E5-2 et E5-3 (AFF_MSG), sur les afficheurs physiques des équipements d'affichage dont la liste blanche a été configurée pour recevoir les messages en provenance de cet agent. On notera que la figure 2 illustre un simple exemple non limitatif dans lequel trois affichages sont opérés.

Ainsi, les informations générées par l'émetteur au cours de l'étape E4 (GEN_MSG) peuvent être envoyées via une application de messagerie standard, permettant une mise à jour rapide et efficace de l'ensemble des afficheurs du réseau de transport de la figure 3.

De plus, grâce à la fonctionnalité de messagerie de groupe (« group chat »), un ensemble de terminaux 13 peut recevoir en même temps l'information distribuée par l'émetteur. Le système d'envoi revient à envoyer un message RCS vers le terminal ciblé, ou sur le chat de groupe dédié à un ensemble de terminaux 13.

En effet, comme dans l'exemple de la figure 1, l'usager du réseau de transport peut choisir de s'abonner (« opt-in », 14) aux flux RCS diffusés par tout ou partie des agents de l'entreprise de gestion du réseau de transport. Par exemple, un usager peut choisir de s'abonner aux conversations de l'agent « Information générale du réseau », et de l'agent « arrêt de bus A1 », si cet arrêt est celui qu'il fréquente quotidiennement pour aller travailler.

Dans un mode de réalisation, des QR codes sont disposés dans les arrêts de bus, à proximité des afficheurs, pour permettre aux usagers de s'abonner aux conversations RCS de leur choix. En scannant le QR code avec leur smartphone 13, les usagers réalisent un « opt-in » leur permettant d'intégrer la conversation de groupe. Les utilisateurs peuvent ainsi recevoir le même contenu que l'afficheur, sans être devant cet afficheur. Ainsi, un utilisateur peut être par exemple informé qu'il va y avoir des perturbations sur l'ensemble du réseau de transport, en raison d'une manifestation sportive ou d'intempéries, et choisir un mode de déplacement alternatif, comme le vélo. On ouvre ainsi la possibilité d'ouvrir le canal de communication « Machine-To-Machine » du système d'affichage public aux personnes physiques que sont les utilisateurs.

Dans une variante de réalisation, des messages publicitaires peuvent également être diffusés sur le système d'affichage public, entre les messages d'information. La diffusion de tels messages publicitaires peut générer une source de revenus pour l'entreprise de gestion du système d'affichage, qui peut aider au financement des investissements matériels à réaliser pour les équipements d'affichage (écran, carte SIM, etc.)

La figure 4 illustre un système informatique 40 conçu pour gérer un système d'affichage public utilisant le protocole RCS, par exemple le système informatique de l'entreprise de gestion du réseau de transport.

Le système informatique 40 constitue l'élément central qui orchestre l'ensemble des opérations nécessaires à la gestion des affichages publics. Il comprend une mémoire 44, qui stocke les données nécessaires au fonctionnement du système, y compris les configurations, les messages à envoyer, et les informations de sécurité, et un processeur 43, qui exécute les instructions nécessaires pour le fonctionnement des modules et la gestion des communications. Il est le cœur du système informatique, traitant les données et coordonnant les opérations.

Un tel système informatique 40 comprend un module 41 de configuration de liste d'identifiants d'agents conversationnels. Ce module est responsable de la gestion des listes d'identifiants d'agents autorisés à envoyer des messages aux équipements d'affichage. Il assure que seuls les agents vérifiés peuvent communiquer avec le système, renforçant ainsi la sécurité.

Il comprend également un module 42 de génération de message. Ce composant génère les messages RCS à diffuser par les agents conversationnels. Il s'assure que les messages sont correctement formatés et prêts à être envoyés aux équipements d'affichage.

Il comprend aussi une application de messagerie RCS 45, qui gère l'envoi et la réception des messages RCS, permettant une communication fluide et efficace entre les agents conversationnels et les équipements d'affichage.

Ensemble, ces composants permettent au système d'assurer une gestion sécurisée et efficace des affichages publics, en utilisant la technologie RCS pour diffuser des informations contextuelles en temps réel.

### Application industrielle

Les présentes solutions techniques peuvent trouver à s'appliquer notamment aux administrations publiques, entreprises de transport, musées, ou tout autre organisme souhaitant diffuser une communication temps réel vers le public.

Elles peuvent par exemple s'appliquer à une gestion de flux de visiteurs dans un musée ou un parc de loisirs, en informant le public de la fréquentation ou des temps d'attente devant telle ou telle attraction, et en incitant les utilisateurs à se déplacer dans des zones moins fréquentées du parc, grâce à une communication en temps réel soutenue par la technologie RCS.

Elles présentent de nombreux avantages pour la gestion des systèmes d'affichage public. Elles permettent une communication standardisée et sécurisée grâce à l'utilisation du protocole RCS, simplifiant ainsi le déploiement et la gestion des affichages publics. Les agents conversationnels facilitent la diffusion d'informations contextuelles en temps réel, améliorant l'accessibilité et l'engagement des utilisateurs. De plus, l'intégration de listes blanches et de validations par opérateur renforce la sécurité des communications, empêchant l'affichage de contenus non autorisés. Enfin, la flexibilité du système permet une adaptation facile à divers environnements publics, réduisant les coûts d'installation et de maintenance.

En outre, un des avantages de l'invention réside dans la simplicité d'utilisation offerte par l'application de messagerie RCS, qui est préinstallée par défaut sur les équipements standards de communication, tels que les smartphones Android. Contrairement aux applications de messagerie propriétaires, qui nécessitent souvent le téléchargement et l'installation d'applications supplémentaires, l'utilisation de RCS élimine cette étape, facilitant ainsi l'accès immédiat aux services de messagerie enrichie. Cette intégration native simplifie non seulement le processus pour les utilisateurs, mais assure également une adoption plus large et homogène de la technologie, permettant une communication fluide et sans interruption entre les différents appareils compatibles.

La présente divulgation ne se limite pas aux exemples décrits ci-avant, seulement à titre d'exemple, mais elle englobe toutes les variantes que pourra envisager l'homme de l'art dans le cadre de la protection recherchée.

## Revendications

1. Procédé de gestion d'un système d'affichage public, comprenant une création (E1, E3) d'une liste d'identifiants d'au moins un agent conversationnel autorisé à envoyer des messages via un réseau de communication internet à un ensemble d'au moins un équipement d'affichage public (12, A1-A3, B1-B4) dudit système, lesdits messages étant conformes au protocole de messagerie enrichie RCS (pour l'anglais « Rich Communication Services »).

2. Procédé de gestion d'un système d'affichage public selon la revendication 1, comprenant en outre une génération (E4) d'un message à diffuser par l'un desdits agents, et une diffusion dudit message RCS généré, par ledit agent, vers ledit ensemble d'équipements qui lui est associé, et un affichage (E5-1, E5-2, E5-3), par lesdits équipements dudit ensemble, dudit message RCS diffusé.

3. Procédé de gestion d'un système d'affichage public selon la revendication 1 ou 2, comprenant en outre une validation (E2), par un opérateur dudit réseau de communication internet, desdits agents conversationnels créés.

4. Procédé de gestion d'un système d'affichage public selon l'une quelconque des revendications 1 à 3, **caractérisé en ce que** lesdits agents conversationnels sont configurés pour gérer des discussions de groupe et diffuser lesdits messages RCS dans lesdites discussions de groupe.

5. Procédé de gestion d'un système d'affichage public selon la revendication 4, comprenant en outre un abonnement (14) d'au moins un utilisateur, à une discussion de groupe au sein de laquelle sont diffusés lesdits messages RCS affichés par l'un desdits équipements d'affichage public.

6. Procédé de gestion d'un système d'affichage public selon la revendication 5, **caractérisé en ce que** ledit abonnement comprend un scan, par un équipement de communication (13) dudit utilisateur, d'un QR code disposé à proximité dudit équipement d'affichage public.

7. Procédé de gestion d'un système d'affichage public selon l'une quelconque des revendications 5 et 6, comprenant en outre une validation (E2), par un opérateur d'un réseau de communication mobile auquel est abonné ledit utilisateur, desdits agents conversationnels créés.

8. Procédé de gestion d'un système d'affichage public selon l'une quelconque des revendications 1 à 7, comprenant en outre une sécurisation des communications entre lesdits agents et lesdits équipements d'affichage public comprenant une identification desdits agents et une authentification desdits messages diffusés par une carte SIM ou eSIM intégrée dans lesdits équipements d'affichage public.

9. Programme informatique comportant des instructions pour la mise en œuvre du procédé selon l'une des revendications 1 à 8 lorsque ce programme est exécuté par un processeur.

10. Support d'enregistrement non transitoire lisible par un ordinateur sur lequel est enregistré un programme pour la mise en œuvre du procédé selon l'une des revendications 1 à 8 lorsque ce programme est exécuté par un processeur.

11. Système d'affichage public comprenant un ensemble d'au moins un équipement d'affichage public et un ou plusieurs agents conversationnels, chacun configuré pour envoyer via un réseau de communication internet audit ensemble d'au moins un équipement d'affichage public dudit système auquel il est associé, des messages conformes au protocole de messagerie enrichie RCS (pour l'anglais « Rich Communication Services »).

12. Système d'affichage public selon la revendication 11, dans lequel chaque équipement d'affichage public dudit ensemble comprend un dispositif d'affichage, une application de messagerie RCS et un moyen de communication Internet, lesdits équipements étant configurés pour recevoir et afficher des messages provenant desdits agents conversationnels, ledit système comprenant en outre un module de génération (42) d'un message RCS à diffuser par l'un desdits agents vers ledit ensemble d'équipements qui lui est associé.

13. Système d'affichage public selon la revendication 11 ou 12 configuré pour mettre en œuvre le procédé de gestion selon l'une quelconque des revendications 1 à 8.
